# EUROPÄISCHE PATENTSCHRIFT

(11) **EP 2 397 578 B1**
(45) Veröffentlichungstag und Bekanntmachung des Hinweises auf die Patenterteilung: **05.10.2016**
(21) Anmeldenummer: 11169579.7
(22) Anmeldetag: 10.06.2011
(51) Int. Cl.: C25B 11/03, H01M 4/86

(54) **Sauerstoffverzehrelektrode und Verfahren zu ihrer Herstellung**
Oxygen-consuming electrode and method for its production
Électrode catalytique consommant de l'oxygène et son procédé de fabrication

(30) Priorität: 16.06.2010 DE 102010024053
(43) Veröffentlichungstag der Anmeldung: 21.12.2011
(73) Patentinhaber: Covestro Deutschland AG, 51373 Leverkusen (DE)
(72) Erfinder: Turek, Thomas, 38640 Goslar (DE); Moussallem, Imad, 63457 Hanau (DE); Bulan, Andreas, 40764 Langenfeld (DE); Schmitz, Norbert, 51766 Engelskirchen (DE); Weuta, Peter, 51375 Leverkusen (DE)
(74) Vertreter: Levpat

(56) Entgegenhaltungen:
- EP-A2- 1 728 896
- RUDOLF STAAB: "Alkalichlorid-Elektrolyse mit Sauerstoff-Verzehrkathode - ein Verfahren zur Energie-Einsparung", CHEMIE INGENIEUR TECHNIK, WILEY VCH. VERLAG, WEINHEIM; DE, Bd. 59, Nr. 4, 1. April 1987 (1987-04-01), Seiten 316-319, XP001283915, ISSN: 0009-286X

## Beschreibung

Die Erfindung betrifft eine Sauerstoffverzehrelektrode für die Reduktion von Sauerstoff in alkalischen Medium mit einer neuartigen mehrlagigen Katalysatorbeschichtung sowie eine Elektrolysevorrichtung. Die Erfindung betrifft ferner ein Herstellungsverfahren für die Sauerstoffverzehrelektrode sowie ihre Verwendung in der Chloralkali-Elektrolyse oder in Brennstoffzellen.

Die Erfindung geht aus von an sich bekannten Sauerstoffverzehrelektroden, die als flächige Gasdiffusionselektroden ausgebildet sind und üblicherweise einen elektrisch leitenden Träger und eine Gasdiffusionsschicht mit einer katalytisch aktiven Komponente umfassen.

Verschiedene Vorschläge zum Betrieb der Sauerstoffverzehrelektroden in Elektrolysezellen in technischer Größe sind aus dem Stand der Technik grundsätzlich bekannt. Die Grundidee dabei ist, die Wasserstoff entwickelnde Kathode der Elektrolyse (beispielsweise in der Chloralkali-Elektrolyse) durch die Sauerstoffverzehrelektrode (Kathode) zu ersetzen. Eine Übersicht über die möglichen Zelldesigns und Lösungen kann der Veröffentlichung von Moussallem et al "Chlor-Alkali Electrolysis with Oxygen Depolarized Cathodes: History, Present Status and Future Prospects", J. Appl. Electrochem. 38 (2008) 1177-1194, entnommen werden.

Die Sauerstoffverzehrelektrode - im folgenden auch kurz SVE genannt - muss eine Reihe von Anforderungen erfüllen, um in technischen Elektrolyseuren einsetzbar zu sein. So muss der Katalysator und alle anderen verwendeten Materialien chemisch stabil sein gegen Natronlauge von ca. 32 Gew.% und gegenüber reinem Sauerstoff bei einer Temperatur von typischerweise 80 - 90°C. Ebenso wird ein hohes Maß an mechanischer Stabilität gefordert, da die Elektroden in Elektrolyseuren einer Größe von üblicherweise mehr als 2 m² Fläche (technische Größe) eingebaut und betrieben werden. Weitere Eigenschaften sind: eine hohe elektrische Leitfähigkeit, eine geringe Schichtdicke, eine hohe innere Oberfläche und eine hohe elektrochemische Aktivität des Elektrokatalysators, sowie ihre Dichtigkeit, so dass Gas und Flüssigkeitsraum voneinander getrennt bleiben. Die Langzeitstabilität und geringe Herstellkosten sind weitere besondere Anforderungen an eine technisch nutzbare Sauerstoffverzehrelektrode.

Die Erfindung betrifft insbesondere eine Sauerstoffverzehrelektrode, die mehrlagig aufgebaut ist und welche zwischen der Gas- und der Elektrolytseite einen Unterschied bezüglich der Katalysator- bzw. PTFE-Konzentration aufweist und nach dem Nassverfahren hergestellt werden kann.

Sauerstoffverzehrkathoden gemäß dem Stand der Technik werden in unterschiedlichen Anordnungen bei elektrochemischen Prozessen eingesetzt, so zum Beispiel bei der Erzeugung von Strom in Brennstoffzellen oder bei der elektrolytischen Herstellung von Chlor aus wässrigen Lösungen von Natriumchlorid. Eine nähere Beschreibung der Chlor-Alkali-Elektrolyse mit Sauerstoffverzehrkathoden befindet sich in Journal of Applied Electrochemistry, Vol 38 (9) Seite 1177 -1194 (2008). Beispiele für Elektrolysezellen mit Sauerstoffverzehrkathoden sind den Schriften EP 1033419B1, DE 19622744C1 und WO 2008006909A2 zu entnehmen.

Eine Sauerstoffverzehrkathode besteht typischerweise aus einem Trägerelement, zum Beispiel einer Platte aus porösem Metall oder Gewebe aus Metalldrähten, und einer elektrochemisch aktiven Beschichtung. (DE 3710168). Die elektrochemisch aktive Beschichtung ist porös und besteht aus hydrophilen und hydrophoben Bestandteilen. Die hydrophoben Bestandteile erschweren das Eindringen von Elektrolyten und halten somit die entsprechenden Poren für den Transport des Sauerstoffs zu den katalytisch aktiven Zentren frei. Die hydrophilen Bestandteile ermöglichen das Eindringen des Elektrolyten zu den katalytisch aktiven Zentren und den Abtransport der Hydroxid-Ionen. Als hydrophobe Komponente wird beispielsweise Polytetrafluorethylen (PTFE) eingesetzt. Hydrophobe Oberflächen weisen üblicherweise einen Randwinkel von mehr als 140° bei der Benetzung mit reinem Wasser auf.

Bei der Fertigung von Sauerstoffverzehrkathoden kann man prinzipiell zwischen trockenen und nassen Fertigungsverfahren unterscheiden.

Bei den trockenen Verfahren wird ein Pulver-Gemisch aus Katalysator und polymerer Komponente (wie z.B. PTFE) hergestellt (z.B. gemäß der DE 2941774) zu Partikeln gemahlen, welche anschließend auf einen elektrisch leitendes Trägerelement verteilt und bei Raumtemperatur verpresst werden. Ein solches Verfahren ist beispielsweise in EP 1728896A2 beschrieben. Als bevorzugter Katalysator wird Silberoxid/Silber, als Binder Polytetrafluoroethylen (PTFE), und als Träger ein Netz aus Nickeldrähten genannt.

Bei den nassen Fertigungsverfahren wird entweder eine Paste oder eine Suspension bestehend aus Katalysator und polymerer Komponente in einem Dispersionsmittel, bevorzugt Wasser verwendet. Zur Herstellung der Suspension können noch zusätzlich oberflächenaktive Substanzen zugegeben werden, um die Stabilität der Supension oder Paste zu erhöhen. Zur besseren Verarbeitbarkeit kann der Supsension ein Verdickungsmittel zugegeben wird. Die Paste wird anschließend über Siebdruck oder Kalendrieren auf einen Stromverteiler aufgebracht, während die weniger viskose Suspension üblicherweise aufgesprüht wird.

Die Paste bzw. Suspension wird nach der Entfernung von überschüssigem Dispersionsmittel schonend getrocknet und bei Temperaturen im Bereich des Schmelzpunktes des Polymers verpresst (Journal of Applied Electrochemistry, Vol 38 (9) Seite 1177-1194 (2008)). Die Sauerstoffverzehrkathoden können aus einer einlagigen Schicht bestehen, die auf einen Träger aufgebracht wird. Der Träger kann dabei mehrere Aufgaben übernehmen, zum einen die Bereitstellung der mechanischen Stabilität der fertigen SVK oder/und die Übernahme der Stromverteilung innerhalb der katalytisch aktiven Schicht.

Nachteil der bekannten einlagigen Elektroden ist jedoch, dass sie empfindlich gegenüber Flüssigkeits- und Gasdurchbruch sind. Dies ist insbesondere in technischen Elektrolyseuren von entscheidender Bedeutung. Dabei darf weder Gas aus dem Gasraum in den Elektrolytraum gelangen, noch Elektrolyt aus dem Elektrolytraum in den Gasraum. Bei technischen Elektrolyseuren muss die Sauerstoffverzehrkathode den hydrostatischen Druck, der am Boden der technischen Elektrolysezelle herrscht, von beispielsweise 170 mbar aushalten. Da eine Gasdiffusionselektrode ein Porensystem aufweist, gelangt immer eine geringe Menge an Flüssigkeit in den Gasraum und Gas gelangt in den Flüssigkeitsraum. Die Menge hängt dabei vom Zelldesign des Elektrolyseures ab. Die SVK sollte bei einer Druckdifferenz zwischen dem Gas- und dem Flüssigkeitsraum von 10-60 mbar dicht sein. Hierbei ist mit dicht gemeint, dass kein Austreten von Gasblasen in den Elektrolytraum mit dem bloßen Auge beobachtbar ist. Mit flüssigkeitsdicht ist gemeint, dass eine Flüssigkeitsmenge von nicht mehr als 10 g /(h*cm²) durch die SVK tritt (wobei g für die Masse an Flüssigkeit, h für eine Stunde und cm² für die geometrische Elektrodenoberfläche steht).

Tritt jedoch zuviel Flüssigkeit durch die SVK so kann diese nur an der der Gasseite zugewandten Seite nach unten abfließen. Dabei kann sich ein Flüssigkeitsfilm ausbilden, der den Gaszutritt zur SVK behindert und dadurch die Leistungsfähigkeit der SVK extrem negativ beeinflusst (Sauerstoff-Unterversorgung). Tritt zuviel Gas in den Elektrolytraum ein, so müssen die Gasblasen aus dem Elektrolytraum herausgeführt werden können. In jedem Fall blenden die Gasblasen einen Teil der Elektroden- und der Membranfläche ab, was zu einer Stromdichteverschiebung und damit im galvanostatischen Betrieb der Zelle zu einer lokalen Stromdichteerhöhung und über die Zelle zu einer unerwünschten Zellspannungserhöhung führt.

Einlagige Sauerstoffverzehrkathoden, die diesem Anforderungsprofil genügen, sind bisher nicht bekannt. Um die verfügbaren Sauerstoffverzehrkathoden in einem technischen Elektrolyseur zu betreiben, wurde bisher das Zelldesign an die Unzulänglichkeit der Sauerstoffverzehrkathode angepasst. Z.B. wurden Elektrolyseure mit Druckkompensation entwickelt, wie in DE 19622744C1, welche die hydrostatische Höhe der Flüssigkeit vor der Elektrode dadurch kompensieren, dass der Gasraum mit Gastaschen unterteilt wird, wobei in jeder Gastasche ein dem hydrostatischen Druck angepasster Gasdruck eingestellt wird. Nachteil hierbei ist jedoch, dass neben dem hohen Aufwand und Materialeinsatz beim Bau der Zelle auch Elektrodenfläche verloren geht und für eine gleiche Leistung der Elektrolysezelle eine größere Anzahl von Elektrolyse-Elementen oder mehr Elekrodenfläche benötigt wird.

Es zeigte sich, dass insbesondere nach dem Nassverfahren hergestellte einlagige SVK für den Einsatz in technischen Elektrolyseuren aufgrund unzureichender Gas- und Elektrolytdichtheit nicht einsetzbar sind.

Mehrlagige Sauerstoffverzehrkathoden können grundsätzlich nach dem Trocken- oder Nass-Pastierverfahren hergestellt werden. Gemäß der EP 1728896 werden mehrlagige Sauerstoffverzehrkathoden nach dem Trockenverfahren hergestellt. Dabei werden Pulverschichten erzeugt, in denen der PTFE-Gehalt von 3 bis 15 Gew.-% variiert. Es wird keine Aussage über die Anordnung der Schichten mit unterschiedlichem PTFE-Gehalt gemacht. Nachteil des beschriebenen Verfahrens ist, dass die Schichten nicht beliebig dünn ausgebildet werden können. Folge hiervon ist, dass eine entsprechend aufgebaute mehrlagige Sauerstoffverzehrkathode relativ dick wäre, was zu einer erhöhten Zellspannung in der Elektrolyse führt und durch den vermehrten Materialeinsatz hohe Herstellkosten verursacht.

Die US 46024261 offenbart ebenfalls eine mehrlagige Sauerstoffverzehrkathode, die nach dem Trocken-Verfahren hergestellt wird. Die beste offenbarte zweilagige Elektrode weist hierbei eine Dicke von mindestens 0,89 mm auf. Offenbarte PTFE-Gehalte liegen im Bereich von mindestens 10 Gew.-% bis zu 50 Gew.-%. Solch hohe PTFE-Gehalte können dazu führen, dass die aktiven Katalysatorpartikel kein elektrisch leitfähiges Netzwerk in der Elektrode ausbilden und daher nicht mehr der gesamte Anteil des Katalysatormaterials für die elektrochemische Reaktion zur Verfügung steht. Dies verringert die Effizienz der Elektrolysezelle und erhöht damit die Zellspannung.

Die US 5584976 offenbart eine mehrlagige Sauerstoffverzehrkathode, die über das beidseitige Auftragen von Schichten auf ein Silbersubstrat hergestellt wird. Dabei wird die äußerste, der Gasseite zugewandten Lage, komplett aus einem hydrophoben Material, offenbart ist hier eine reine, poröse PTFE-Lage, hergestellt. Die offenbarten Zellspannungen für diese mehrlagigen Sauerstoffverzehrkathoden liegen im Bereich von 2,3 bis 2,4 V (bei einer Stromdichte von 3 kA/m²) und sind damit sehr hoch.

Allen diesen mehrlagigen Sauerstoffverzehrkathoden ist gemein, dass entweder die PTFE-Gehalte in den hydrophoben Schichten relativ hoch sind und damit zu hohen Zellspannungen oder die Herstellverfahren führen zu dicken Elektroden und damit ebenfalls zu höheren Zellspannungen.

Insbesondere, wenn die der Gasseite zugewandten Seite einen hohen PTFE-Anteil aufweist, kann die Elektrode in bestimmten Zellkonstruktionen nicht eingesetzt werden. So erfolgt beispielsweise in der Fallfilmzellentechnologie (DE 3401636A1 oder WO 0157290A1) die Kontaktierung der SVK durch eine elastische Matte oder ähnliche Konstruktionen von der Gasseite aus. Bei hohen PTFE-Gehalten nimmt jedoch die elektrische Leitfähigkeit der Schicht stark ab, so dass entweder ein höherer ohmscher Widerstand entsteht, was zu höherer Zellspannung führt oder eine Kontaktierung gar nicht möglich ist, wodurch sich der Einbau der SVK in die Elektrolysezelle sehr aufwendig gestaltet. Bidault et al. (2010, Int. J. of Hydrogen Energy, "An improved Cathode for alkaline fuell cells", 35, pp. 1783-1788) haben in Untersuchungen zeigen können, das die Dicke der Sauerstoffverzehrkathode einen sehr großen Einfluss auf die Gesamtleistung der Elektrode haben kann. Messungen mit zwei-lagigen Elektroden auf einem Nickelschaum, die der Anode zugewandten Lage bestand aus aufplatiertem Silber. Die dem Gasraum zugewandte Lage bestand aus einer porösen Kohlenstoff-PTFE-Mischung. Diese Elektroden zeigten, dass eine Erniedrigung der Dicke von 0,7mm auf 0,5mm eine Verbesserung des Halbzell-Potentials um 100 mV ermöglicht. Schichtdicken von weniger als 0,5mm mit dem hier verwendeten zwei-lagigen Aufbau, führen zu Elektroden, die nicht ausreichend Elektrolytdicht sind und bei denen ein Elektrolytdurchbruch in den Gasraum auftritt.

Aufgabe dieser Erfindung war die Herstellung einer mehrlagigen Sauerstoffverzehrkathode mit geringer Dicke, die die benötigte Hydrophobizität erzielt, wodurch eine hohe Dichtheit gegenüber Flüssigkeits- und Gasdurchbruch erzielt werden kann und eine elektrische Kontaktierung von der Gasseite aus ermöglicht wird.

Eine Möglichkeit die aus dem Stand der Technik bekannten Nachteile zu überwinden, ist der mehrlagige Aufbau der Sauerstoffverzehrkathode gemäß des Anspruchs 1.

Die neuen mehrlagige Sauerstoffverzehrelktroden sind hinsichtlich Gas- bzw. Elektrolytdurchbruch dichter als die bekannten SVEs. Der Ansatz der technischen Lösung hierbei ist, eine Lage bzw. Schicht hydrophob zu gestalten, damit dort der Elektrolyt nicht in die Poren eindringt. Eine weitere Schicht wird hydrophil ausgestaltet, damit der Elektrolyt und damit der Reaktionspartner Wasser an den Katalysator vordringen und die elektrochemische Reaktion stattfinden kann. Hierdurch wird gewährleistet, dass Flüssigkeit zwar auf der einen Seite in die Elektrode eindringen kann, jedoch nicht durch die Elektrode auf die Gasseite durchbrechen kann. Gleichzeitig wird dadurch gewährleistet, dass das Gas ebenfalls eindringen, jedoch zur Elektrolytseite nicht durchbrechen kann. Eine bevorzugte Sauerstoffverzehrelektrode ist dadurch gekennzeichnet, dass der Katalysator als katalytisch aktive Komponente Silber enthält.

Eine bevorzugte Ausführungsform der mehrlagigen Sauerstoffverzehrelektrode ist dadurch gekennzeichnet, dass die Schicht der der Gasseite zugewandte Seite einen Katalysator-Anteil von 92 bis 98 Gew.% und die der Elektrolytseite zugewandten Schicht einen Katalysator-Anteil von 95 bis 99,9 Gew.% aufweist, wobei der zu 100% ergänzte Anteil der Katalysatorschicht auf einem hydrophoben Polymer basiert. Eine besonders bevorzugte Ausführungsform der Sauerstoffverzehrelektrode ist dadurch gekennzeichnet, dass mindestens drei Katalysator enthaltende Schichten vorhanden sind und die der Gasseite zugewandte äußerste Schicht einen Katalysator-Anteil von 92 bis 98 Gew.-% und die der Elektrolytseite zugewandte äußerste Schicht einen Katalysator-Anteil von 95 bis 99,9% und dass eine mittlere Schicht vorliegt, die einen Katalysator-Anteil von mehr als der der Gasseite zugewandten äußerste Schicht und weniger als in der der Elektrolyt-Seite zugewandten äußersten Schicht aufweist.

In einer bevorzugten Ausführung der Erfindung weist die hydrophobe Schicht ein hydrophobes Polymer, insbesondere ein fluorsubstituiertes Polymer, bevorzugt PTFE auf.

Eine besondere Variante der Sauerstoffverzehrelektrode ist dadurch gekennzeichnet, dass die Elektrode eine Gesamtbeladung an katalytisch aktiver Komponente in einem Bereich von 100 mg/cm² bis 300 mg/cm², bevorzugt von 140 mg/cm² bis 250 mg/cm² aufweist.

Vorteilhafterweise basiert der Träger der Sauerstoffverzehrelektrode auf Nickel, Silber oder einer Kombination von Nickel und Silber.

Insbesondere bevorzugt liegt der Träger der Sauerstoffverzehrelektrode in Form eines Netzes, Gewebes, Gewirkes, Gestrickes, Vlieses oder Schaums, bevorzugt eines Gewebes vor.

Die Dicke der neuen Sauerstoffverzehrelektrode beträgt bevorzugt 0,2 bis 0,8 mm und die Dicke der Katalysator enthaltenden Schichten beträgt maximal 0,4 mm.

Die erfindungsgemäße SVK kann durch ein Nasspastier- oder Sprühverfahren hergestellt werden, welches das gezielte Aufbringen von Schichten mit unterschiedlichen Eigenschaften, d.h. unterschiedlichen und sehr niedrigen PTFE-Gehalten ermöglicht und gleichzeitig zu Elektroden führt, die in Elektrolysezellen mit einer sehr geringen Zellspannung betrieben werden können.

Elektroden erhältlich nach dem Nassverfahren werden allgemein gemäß den folgenden Schritten hergestellt:
1. Herstellung einer Suspension/Paste aus Katalysator und PTFE, ggf. Verdickungsmittel, Stabilisatoren und Tensiden
2. Aufbringen der Suspension / Paste auf einen Träger
3. Trocknung ggf. Sinterung
4. Ggf. Wiederholung von Schritt 2 und 3
5. Ggf. Kompaktierung der aus 4 stammenden SVK ggf. bei erhöhter Temperatur
6. Sinterung

Weiterer Gegenstand der Erfindung ist ein Verfahren zur Herstellung einer neuen Sauerstoffverzehrelektrode, durch
a) Herstellung von mindestens zwei Suspensionen durch Dispergieren oder Mischen der Komponenten bestehend aus zumindest Partikeln einer katalytisch aktiven Substanz, bevorzugt Silberpartikeln, und einem Dispersionsmittel, bevorzugt einem organischen Lösungsmittel oder Wasser, besonders bevorzugt Wasser, und Partikeln eines hydrophoben Polymeren mit unterschiedlichem Anteil an hydrophoben Polymeren,
b) Sprühen der Suspensionen in mehreren Schritten auf einen Träger zur Erzeugung der unterschiedlichen Schichten, bevorzugt ein Nickel-Träger, wobei der Träger auf eine Temperatur im Bereich von 100°C bis 160°C, bevorzugt 100°C bis 145°C erwärmt ist, unter mindestens teilweiser Entfernung des Dispersionsmittels,
c) Heißpressen der nach Schritt b) erhaltenen Elektrode insbesondere unter einem Druck in einem Bereich von 0,1- 3 t/cm², bevorzugt in einem Bereich von 0,1 - 0,25 t/cm² und bei einer Temperatur im Bereich von 110°C bis 140°C, besonders bevorzugt bei 130°C.
d) anschließendes Sintern der Elektrode bei einer Temperatur von mindestens 200°C bevorzugt mindestens 250°C, besonders bevorzugt mindestens 300° °C.

Bevorzugt ist daher auch eine neue Sauerstoffverzehrelektrode wie oben beschrieben, die dadurch gekennzeichnet ist, dass die den Katalysator enthaltenden Schichten durch Aufbringen einer Silberpartikel enthaltenden Suspension auf den Träger, Trocknen der Suspension, Heißpressen der Schichten und anschließendes Sintern der entstandenen Elektrode erzeugt sind.

In einer besonders bevorzugten Variante des Verfahrens weist bei dem Silber, das für die Suspension in Pulverform eingesetzt ist, die Partikelverteilung der Silberpartikel einen D₉₀ Wert von <8 µm und einen D₁₀ Wert von <1µm auf. (Bestimmung gemäß Stiess, "Mechanische Verfahrenstechnik - Partikeltechnologie 1", 2009, 3. Aufl. Springer-Verlag, Seite 32 ff.)

Besonders bevorzugt beträgt die Klopfdichte der Silberpartikel für die Suspension im Bereich von 2 bis 6 g/cm³, bevorzugt von 3 bis 5 g/cm³. DIN ISO 3953

Ganz besonders bevorzugt liegt die durchschnittliche Oberfläche des Silberpulvers das in dem neuen Verfahren eingesetzt wird gemäß BET im Bereich von 0,3 bis 2,5 m²/g, bevorzugt von 0,50 bis 1,5 m²/g.

Beispielsweise können Silberpulver der Fa. Ferro (Hanau) der Typen SF9ED, 331, 311 eingesetzt werden oder die in der EP 115845 A2 beschriebenen Katalysatoren, bei denen Silber auf PTFE gefällt wurde. Verschiedene Silberpulver können dabei in verschiedenen Schichten eingesetzt werden. Hierbei können in den Schichten die PTFE-Gehalte unterschiedlich gewählt werden.

Der Katalysator wird beispielsweise mit einem hydrophoben Polymer enthaltenen Suspension wie z.B. einer handelsüblichen PTFE-Supension vermischt. Zur Stabilisierung und Verdickung der Suspension wird beispielsweise eine Methylcellulose zugegegeben. Der Methylcellulose-Gehalt in der Suspension beträgt beispielsweise 0,5%. Alternativ hierzu haben sich als bevorzugtes Verdickungsmittel bewährt: Polyvinylalkohol (PVA) und Polyacrylat (PA).

Die Suspension kann weiter ein Detergenz umfassen. Detergenzien sind etwa ionische oder nicht ionische Tenside, wie etwa die unter der Handelsnamenfamilie Tween allgemein bekannten Stoffe oder die unter der Handelsnamenfamilie Triton bekannten Stoffe. Bevorzugt wird ein Detergenz eingesetzt und dieses ist besonders bevorzugt Triton-X 100.

Die Elektrode wird beispielsweise so hergestellt, dass auf einen Träger, wie z.B. ein Nickel-Netz, ein versilbertes Nickel-Netz oder ein Silber-Netz die Suspension aufgebracht wird. Dies kann durch ein Sprühverfahren oder durch ein Rakel- oder Kisscoater-Verfahren erfolgen oder andere gängige Verfahren wie z.B. Siebdruck. Die unterschiedlichen Schichten der erfindungsgemäßen Elektrode werden so aufgebaut, dass beginnend auf den Träger eine Schicht aufgebracht wird. Diese mittlere Schicht weist dabei z. B. einen PTFE-Gehalt von 2 bis 8 Gew.% auf.

Diese mittlere Schicht wird so dick ausgeführt, dass der Träger keine Lücken mehr aufweist. Üblicherweise werden 20 bis 80% der Katalysatorbeladung der Elektrode in dieser Schicht verarbeitet.

Wird ein Träger eingesetzt, der aus einem Nickel-Netz besteht, dessen Maschenweite nur gering ist, reichen bereits wenige Zyklen des Aufsprühens und Trocknes bis eine dichte Elektrode erzeugt wird.

Anschließend wird bevorzugt auf der dem Elektrolyt zugewandten Seite der Elektrode eine Suspension eingesetzt, bei der nach Entfernung des Lösungsmittels ein PTFE Gehalt von 0,2 bis 5 Gew.% entsteht, bevorzugt 0,5 - 2 Gew.-%. Diese Schicht kann entsprechend dünn ausgeführt werden. Üblicherweise beträgt die Beladungsmenge 2 bis 40 Gew.-% der Katalysatorbeladung der gesamten Elektroden.

Auf die der Gasseite zugewandten Seite der Elektrode wird besonders bevorzugt ein PTFE-Gehalt von 2 bis 8 Gew. % erzeugt. Üblicherweise beträgt die Beladungsmenge 2 bis 40 Gew.-% der Katalysatorbeladung der gesamten Elektroden.

Die Beladung der gesamten Elektroden beträgt dabei bevorzugt mind. 100 mg Silber/cm² insbesondere bevorzugt von 140 mg/cm² bis 250 mg/cm², höhere Beladungen zeigen keinen weiteren Vorteil in der Performance bzgl. Zellspannung und Gas- und Flüssigkeitsdichtheit.

Die so aufgebrachten Schichten werden besonders vorteilhaft auf einen Träger aufgebracht, wenn dieser beheizt wird bzw. auf einem beheiztem Untergrund liegt. Die Temperatur beträgt dabei insbesondere mehr als 60°C, insbesondere bevorzugt sollte die Temperatur mehr als 100°C (wenn mit wässrigen Dispersionen gearbeitet wird) und bevorzugt nicht mehr als 200°C aufweisen

Nachdem die Elektrode fertig gestellt wurde, erfolgt zuerst eine Pressung bevor die Elektrode gesintert wird. Diese kann mittels eines Presswerkzeuges z.B. eines hydraulischen Stempels oder durch Kompaktierung mit einer Walze erfolgen. Erfolgt die Pressung mittels hydraulischem Stempel, so beträgt die Presskraft bevorzugt mind. 0,04 t/cm² bis max. 0,4 t/cm², bevorzugt 0,08 bis 0,3 t/cm². Die Pressung kann insbesondere bei erhöhter Temperatur erfolgen, so z.B. einer Temperatur von 60 und 200°C, bevorzugt 80 bis 150°C.

Nach der Pressung erfolgt eine Sinterung der Elektrode. Das Sintern wird vorzugsweise bei einer Temperatur von mindestens 200°C bevorzugt mindestens 250°C, besonders bevorzugt mindestens 300°C und insbesondere bevorzugt bis 400°C ausgeführt. Das Sintern ist besonders vorteilhaft, weil hierdurch die Restanteile an gegebenenfalls eingesetztem Verdicker und/oder Detergenz entfernt werden können. Somit können diese Stoffe nicht als Rest in der Elektrode oder als Film auf der Oberfläche verbleiben und dadurch die Performance der SVK verschlechtern, z.B. durch Erhöhung des Ohmschen Widerstands in der Elektrode. Zugleich haben die bevorzugt eingesetzten fluorierten Polymere üblicherweise bei diesen Temperaturen noch keinen signifikanten Dampfdruck, bzw. zersetzen sich bei diesen Temperaturen noch nicht im merklichen Umfang, so dass diese lediglich erweichen und zusammen mit dem Metallpulver einen stabilisierenden Film ergeben.

Der Sinterprozess kann beispielhaft so durchgeführt werden, dass die Elektrode in einem Vorgang von Raumtemperatur bis auf die Solltemperatur von ca. 340°C mit mind. 2K/min erwärmt wird. Ebenfalls ist eine rampenartige Temperaturerhöhung mit Verweilzeiten auf bestimmten TemperaturNiveaus möglich. Um die Temperatur von 300 bis 350°C, bevorzugt 330 bis 345°C zu erreichen wird die Elektrode beispielsweise wie folgt erwärmt: Von Raumtemperatur an wird die Elektrode mit einem Temperaturanstieg von min. 2°C/min bis 200°C erwärmt, dann 15min auf der Temperatur gehalten, anschließend weiter mit einer Temperaturerhöhung mit der Rate von mind. 2°C/min auf 250°C erwärmt, anschließend wieder 15 min die Temperatur gehalten und wiederum mit mind. 2°C / min auf 300°C erwärmt und 15min gehalten und dann mit 2°C/min auf die Endtemperatur erwärmt und dort ebenfalls wieder 15 min gehalten. Anschließend wird die Elektrode mit 10 bis 200°C/min abgekühlt und ist nach der Abkühlung einsatzbereit.

Mit dem erfindungsgemäßen Verfahren konnten mehrlagige Sauerstoffverzehrelektroden hergestellt werden, die einerseits eine hohe Stabilität gegen Flüssigkeits-, bzw. Gasdurchbruch und andererseits geringe Zellspannungen aufweisen, im Bereich von 2,0 V bei 4 kA/m².

Die erfindungsgemäße Sauerstoffverzehrelektrode kann beispielsweise eingesetzt werden in der Chlor-Alkali-Elektrolyse in Zellen mit einem Laugespalt zwischen Sauerstoffverzehrelektrode und Ionenaustauschermembran oder in direktem Kontakt mit der Ionenaustauschermembran oder in Zellen im Spalt zwischen Ionenaustauschermembran und Sauerstoffverzehrelektrode ein hydrophiles Material vergleichbar der in US 6117286 A1 beschriebenen Verfahren aufweisen.

Die neue Sauerstoffverzehrelektrode wird bevorzugt als Kathode geschaltet, insbesondere in einer Elektrolysezelle für die Elektrolyse von Alkalichloriden, bevorzugt von Natriumchlorid oder Kaliumchlorid, besonders bevorzugt von Natriumchlorid.

Alternativ kann die Sauerstoffverzehrelektrode bevorzugt als Kathode in einer Brennstoffzelle geschaltet werden. Bevorzugte Beispiele für solche Brennstoffzellen ist die alkalische Brennstoffzelle.

Weiterer Gegenstand der Erfindung ist daher die Verwendung der neuen Sauerstoffverzehrelektrode zur Reduktion von Sauerstoff im Alkalischen eingesetzt werden, insbesondere als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

Die neue SVE wird besonders bevorzugt bei der Chlor-Alkali-Elekrolyse und hier insbesondere bei der Natriumchlorid-(NaCl)-Elektrolyse eingesetzt.

Ferner ist Gegenstand der Erfindung eine Elektrolysevorrichtung, insbesondere für die Chloralkalielektrolyse, aufweisend eine neue zuvor beschriebene Sauerstoffverzehrelektrode als Sauerstoff verzehrende Kathode.

Die Erfindung wird nachfolgend durch die Beispiele, welche jedoch keine Beschränkung der Erfindung darstellen, näher erläutert.

### Beispiele

### Beispiel 1

### Herstellung einer Sauerstoffverzehrkathode, 3-lagig, Katalysatorgehalt 99 Gew.-% (Elektrolyt-seitig), 98 Gew.-%(mittig), 97 Gew.-%(Gas-seitig)

Eine wässrige Suspension bestehend aus einem Silberkatalysator der Firma Ferro, SF9ED, eine PTFE-Suspension (TF5035R, 58 wt.%, Dyneon™), ein nicht-ionisches Tensid (Triton-X 100, Fluka Chemie AG) und Hydroxyethylmethylcellulose (Walocel MKX 70000 PP 01, Wolff Cellulosics GmbH & Co. KG) als Verdicker wurde mit verschiedenen Gehalten von Silber und PTFE hergestellt. Die Herstellung der Suspension mit 97 Gew.-% Silber- und 3 Gew.-% PTFE-Gehalt erfolgt durch entsprechende Einwaagen. Die Herstellung der Suspensionen mit einem Silbergehalt von 98 Gew.-% und 99 Gew.-% erfolgte analog. Zu 150 g der Verdickungslösung (1 Gew.-% Methylcellulose in Wasser) wurden 90 g Silberpulver, 53,7 g Wasser und 1,5 g Tensid gegeben. Nach dem Dispergieren der Suspension in einem Rotor-Stator-System (Ultra-Turrax T25 mit der Dispergiereinheit S25N-25F, IKA) bei 13500 min-1 für 5 Minuten (mit 2 Minuten Pause zwischen jeweils 1 minütigem Dispergieren, um eine zu hohe Erwärmung der Lösung zu vermeiden) wurden 4,8 g PTFE-Suspension langsam unter Rühren zugegeben, um eine Agglomeration zu vermeiden.

Die so hergestellten Suspensionen wurden danach mehrmals auf ein Nickelnetz (Hersteller: Haver & Boecker, 106 x 118 µm Netz, 63 µm Drahtdicke) gesprüht. Die Beladung wurde so gewählt, dass 50% der Katalysator-Beladung in der Mitte, und jeweils 25% der Katalysatorbeladung auf die Elektrolytseite und die Gasseite der Elektrode aufgebracht wurde. Während des Sprühens wurde das Nickelnetz auf einer Temperatur von 100°C gehalten. Nachdem die gewünschte Gesamtbeladung von 170 g/cm² an Katalysator erreicht wurde, wurden die Elektroden zwischen zwei Metallplatten fixiert und heiß gepresst, bei einer Temperatur von 130 °C und einem Druck von 0,14 t/cm². Anschließend wurde die Elektrode in Luft mit 3 K/min erhitzt und für 15 min bei 340 °C gesintert.

Die so hergestellte Sauerstoffverzehrkathode (SVK) wurde bei der Elektrolyse einer Natriumchlorid-Lösung mit einer Ionenaustauschermembran von DuPONT N982WX eingesetzt. Die Zellspannung bei einer Stromdichte von 4 kA/m², einer Elektrolyttemperatur von 90°C, einem Natronlaugespalt zwischen SVK und Ionentauschermembran von 3 mm und einer Natronlauge-Konzentration von 32 Gew.-% betrug 2,09 V. Die Elektrode zeigte bis zu einem Sauerstoffdruck von 200 mbar keinen Sauerstoffdurchbruch zur Elektrolytseite und bis zu einer hydrostatischen Höhe von 1 m keinen Laugedurchbruch zur Gasseite. Als Anode wurde eine handelsübliche edelmetallbeschichtete Titanelektrode für die Chlor-Alkalielektroyse eingesetzt (Hersteller Denora).

### Beispiel 2:

Sauerstoffverzehrkathode einlagig mit unterschiedlichen Silbergehalten: a) 93 Gew.-%, b) 97 Gew.-%, c) 98 Gew.-% (Vergleichsbeispiele)

Es wurden drei einlagige Sauerstoffverzehrkathoden entsprechend dem in Beispiel 1 genannten Verfahren hergestellt. Jedoch wurde jeweils nur eine Dispersion mit einem Gehalt von a) 93 Gew.-%, b) 97 Gew.-% oder c) 98 Gew.-% an Silber im Verhältnis zum restlichen Feststoff verwendet. Alle drei Elektroden zeigten bei der Elektrolyse einer Natriumchlorid-Lösung nach im Beispiel 1 genannten Bedingungen eine um 100 mV erhöhte Zellspannung und einen starken Gasdurchbruch bei 200 mbar Sauerstoff und einen Flüssigkeitsdurchbruch bei 1 m hydrostatischer Höhe.

### Beispiel 3:

Sauerstoffverzehrkathode zweilagig, Katalysatorgehalt 1. Lage (Elektrolyt zugewandt) 99%, 2. Lage (Gasseite-zugewandt) 88% (Vergleichsbeispiel)

Es wurde eine zweilagige Sauerstoffverzehrkathode entsprechend dem in Beispiel 1 genannten Verfahren hergestellt jedoch wurden nur zwei Dispersion mit verschiedenem Katalysatoranteil verwendet, resultierend in einem Katalysatorgehalt von 99 Gew.-% in der Lage, die dem Elektrolyt zugewandt war, und von 88 Gew.-% in der Lage, die dem Gas zugewandt war. Hier zeigte sich bei der Elektrolyse einer Natriumchlorid-Lösung nach im Beispiel 1 genannten Bedingungen eine um 120 mV höhere Zellspannung.

## Patentansprüche

1. Mehrlagige Sauerstoffverzehrelektrode für die Sauerstoffreduktion in wässrigen alkalischen Medien, mindestens aufweisend einen Träger, der insbesondere elektrisch leitend ist, eine einen Katalysator enthaltende Schicht und eine hydrophobe Schicht, wobei die Elektrode eine dem Sauerstoff enthaltenden Gas und eine dem alkalischen Elektrolyten zugewandte Seite aufweist, die **dadurch gekennzeichnet, dass** die Elektrode mindestens zwei verschiedene den Katalysator enthaltende Schichten hat, die einen unterschiedlichen Gehalt an Katalysator aufweisen, und bei der die äußerste, der Gasseite zugewandte Schicht einen geringeren Anteil an Katalysator hat als die äußerste der Elektrolytseite zugewandte Schicht und der Anteil an hydrophobem Material in der hydrophoben Schicht maximal 8 Gew.-% beträgt und dass die hydrophobe Schicht die Schicht mit einen geringeren Anteil an Katalysator ist, die der Gasseite zugewandt ist.

2. Sauerstoffverzehrelektrode nach Anspruch 1, **dadurch gekennzeichnet, dass** der Katalysator als katalytisch aktive Komponente Silber enthält.

3. Sauerstoffverzehrelektrode nach einem der Ansprüche 1 oder 2, **dadurch gekennzeichnet, dass** die Schicht der der Gasseite zugewandte Seite einen Katalysator-Anteil von 92 bis 98 Gew.% und die der Elektrolytseite zugewandten Schicht einen Katalysator-Anteil von 95 bis 99,9 Gew.% aufweist, wobei der zu 100% ergänzte Anteil der Katalysatorschicht auf einem hydrophoben Polymer basiert.

4. Sauerstoffverzehrelektrode nach einem der Ansprüche 1 bis 3, **dadurch gekennzeichnet, dass** die den Katalysator enthaltenden Schichten durch Aufbringen einer Silberpartikel enthaltenden Suspension auf den Träger, Trocknen der Suspension, Heißpressen der Schichten und anschließendes Sintern der entstandenen Elektrode erzeugt sind.

5. Sauerstoffverzehrelektrode nach Anspruch 4, **dadurch gekennzeichnet, dass** das Silber für die Suspension in Pulverform eingesetzt ist, bei dem die Partikelverteilung der Silberpartikel einen D₉₀ Wert von < 8 µm und einen D₁₀ Wert von < 1µm aufweist.

6. Sauerstoffverzehrelektrode nach einem der Ansprüche 4 bis 5, **dadurch gekennzeichnet, dass** die Klopfdichte gemäß DIN ISO 3953 der Silberpartikel für die Suspension im Bereich von 2 bis 6 g/cm³, bevorzugt von 3 bis 5 g/cm³ liegt.

7. Sauerstoffverzehrelektrode nach einem der Ansprüche 4 bis 6, **dadurch gekennzeichnet, dass** die durchschnittliche Oberfläche des Silberpulvers gemäß BET im Bereich von 0,3 bis 2,5 m²/g, bevorzugt von 0,50 bis 1,5 m²/g liegt.

8. Sauerstoffverzehrelektrode nach einem der Ansprüche 1 bis 7, **dadurch gekennzeichnet, dass** mindestens drei Schichten vorhanden sind und die der der Gasseite zugewandte äußerste Schicht einen Katalysator-Anteil von 92 bis 98 Gew.-% und die der Elektrolytseite zugewandte äußerste Schicht einen Katalysator-Anteil von 95 bis 99,9% und eine mittlere Schicht vorliegt, die einen Katalysator-Anteil von mehr als der der Gasseite zugewandten äußerste Schicht und weniger als in der der Elektrolyt-Seite zugewandten äußersten Schicht aufweist.

9. Sauerstoffverzehrelektrode nach einem der Ansprüche 1 bis 8, **dadurch gekennzeichnet, dass** die hydrophobe Schicht ein hydrophobes Polymer, insbesondere ein fluorsubstituiertes Polymer, bevorzugt PTFE aufweist.

10. Sauerstoffverzehrelektrode nach einem der Ansprüche 4 bis 9, **dadurch gekennzeichnet, dass** die Elektrode eine Gesamtbeladung an katalytisch aktiver Komponente in einem Bereich von 100 mg/cm² bis 300 mg/cm², bevorzugt von 140 mg/cm² bis 250 mg/cm² aufweist.

11. Sauerstoffverzehrelektrode nach einem der Ansprüche 1 bis 10, **dadurch gekennzeichnet, dass** der Träger auf Nickel, Silber oder einer Kombination von Nickel und Silber basiert.

12. Sauerstoffverzehrelektrode nach einem der Ansprüche 1 bis 11, **dadurch gekennzeichnet, dass** der Träger in Form eines Netzes, Gewebes, Gewirkes, Gestrickes, Vlieses oder Schaums, bevorzugt eines Gewebes vorliegt.

13. Sauerstoffverzehrelektrode nach einem der Ansprüche 1 bis 12, **dadurch gekennzeichnet, dass** die Dicke der Elektrode 0,2 bis 0,8 mm beträgt.

14. Sauerstoffverzehrelektrode nach einem der Ansprüche 1 bis 13, **dadurch gekennzeichnet, dass** die Dicke der Katalysator enthaltenden Schichten maximal 0,4 mm beträgt.

15. Verfahren zur Herstellung einer Sauerstoffverzehrelektrode nach einem der Ansprüche 1 bis 14, durch
a) Herstellung von mindestens zwei Suspensionen durch Dispergieren oder Mischen der Komponenten bestehend aus zumindest Partikeln einer katalytisch aktiven Substanz, bevorzugt Silberpartikeln, und einem Dispersionsmittel, bevorzugt einem organischen Lösungsmittel oder Wasser, besonders bevorzugt Wasser, und Partikeln eines hydrophoben Polymeren mit unterschiedlichem Anteil an hydrophoben Polymeren,
b) Sprühen der Suspensionen in mehreren Schritten auf einen Träger zur Erzeugung der unterschiedlichen Schichten, bevorzugt ein Nickel-Träger, wobei der Träger auf eine Temperatur im Bereich von 100°C bis 160°C, bevorzugt 100°C bis 145°C erwärmt ist, unter mindestens teilweiser Entfernung des Dispersionsmittels,
c) Heißpressen der nach Schritt b) erhaltenen Elektrode insbesondere unter einem Druck in einem Bereich von 0,04- 0,4 t/cm², bevorzugt in einem Bereich von 0,08 - 0,3 t/cm² und bei einer Temperatur im Bereich von 60°C bis 200°C, besonders bevorzugt 80 - 150°C.
d) anschließendes Sintern der Elektrode bei einer Temperatur mindestens 200°C bevorzugt mindestens 250°C, besonders bevorzugt mindestens 300°C und insbesondere bevorzugt bis 400°C.

16. Verwendung der Sauerstoffverzehrelektrode nach einem der Ansprüche 1 bis 14 als Sauerstoff verzehrende Kathode in der Elektrolyse, insbesondere in der Chloralkalielektrolyse, oder als Elektrode in einer Brennstoffzelle oder als Elektrode in einer Metall/Luft-Batterie.

17. Elektrolysevorrichtung, insbesondere für die Chloralkalielektrolyse, aufweisend eine Sauerstoffverzehrelektrode nach einem der Ansprüche 1 bis 14 als Sauerstoff verzehrende Kathode.

## Claims

1. Multilayer oxygen-consuming electrode for the reduction of oxygen in an aqueous alkaline medium, which comprises at least one support which is, in particular, electrically conductive, a layer containing a catalyst and a hydrophobic layer, where the electrode has a side facing the oxygen-containing gas and a side facing the alkaline electrolyte, which is **characterized in that** the electrode has at least two different layers containing the catalyst which have a differing catalyst content and in which the outermost layer facing the gas side has a lower proportion of catalyst than the outermost layer facing the electrolyte side and the proportion of hydrophobic material in the hydrophobic layer is not more than 8% by weight and **in that** the hydrophobic layer is the layer having a lower proportion of catalyst which faces the gas side.

2. Oxygen-consuming electrode according to Claim 1, **characterized in that** the catalyst contains silver as catalytically active component.

3. Oxygen-consuming electrode according to either Claim 1 or 2, **characterized in that** the layer on the side facing the gas side has a catalyst content of from 92 to 98% by weight and the layer facing the electrolyte side has a catalyst content of from 95 to 99.9% by weight, where the balance of the catalyst layer to 100% is based on a hydrophobic polymer.

4. Oxygen-consuming electrode according to any of Claims 1 to 3, **characterized in that** the layers containing the catalyst have been produced by applying a suspension containing silver particles to the support, drying the suspension, hot pressing the layers and subsequently sintering the electrode formed.

5. Oxygen-consuming electrode according to Claim 4, **characterized in that** the silver is used in powder form for the suspension and has a particle size distribution of the silver particles having a D₉₀ of <8 µm and a D₁₀ of <1 µm.

6. Oxygen-consuming electrode according to either Claim 4 or 5, **characterized in that** the tapped density according to DIN ISO 3953 of the silver particles for the suspension is in the range from 2 to 6 g/cm³, preferably from 3 to 5 g/cm³.

7. Oxygen-consuming electrode according to any of Claims 4 to 6, **characterized in that** the average surface area of the silver powder determined by the BET method is in the range from 0.3 to 2.5 m²/g, preferably from 0.50 to 1.5 m²/g.

8. Oxygen-consuming electrode according to any of Claims 1 to 7, **characterized in that** at least three layers are present and the outermost layer facing the gas side has a catalyst content of from 92 to 98% by weight and the outermost layer facing the electrolyte side has a catalyst content of from 95 to 99.9% and **in that** a middle layer which has a catalyst content greater than that of the outermost layer facing the gas side and less than that of the outermost layer facing the electrolyte side is present.

9. Oxygen-consuming electrode according to any of Claims 1 to 8, **characterized in that** the hydrophobic layer comprises a hydrophobic polymer, in particular a fluorine-substituted polymer, preferably PTFE.

10. Oxygen-consuming electrode according to any of Claims 4 to 9, **characterized in that** the electrode has a total loading of catalytically active component in the range from 100 mg/cm² to 300 mg/cm², preferably from 140 mg/cm² to 250 mg/cm².

11. Oxygen-consuming electrode according to any of Claims 1 to 10, **characterized in that** the support is based on nickel, silver or a combination of nickel and silver.

12. Oxygen-consuming electrode according to any of Claims 1 to 11, **characterized in that** the support is present in the form of a gauze, woven fabric, formed-loop knit, drawn-loop knit, nonwoven or foam, preferably a woven fabric.

13. Oxygen-consuming electrode according to any of Claims 1 to 12, **characterized in that** the thickness of the electrode is from 0.2 to 0.8 mm.

14. Oxygen-consuming electrode according to any of Claims 1 to 13, **characterized in that** the thickness of the catalyst-containing layers is not more than 0.4 mm.

15. Process for producing an oxygen-consuming electrode according to any of Claims 1 to 14 by
a) producing at least two suspensions by dispersing or mixing the components consisting of at least particles of a catalytically active substance, preferably silver particles, and a dispersion medium, preferably an organic solvent or water, particularly preferably water, and particles of a hydrophobic polymer having a differing proportion of hydrophobic polymers,
b) spraying the suspension in one or more steps onto a support to produce the varying layers, preferably a nickel support, where the support has been heated to a temperature in the range from 100°C to 160°C, preferably from 100°C to 145°C, with at least partial removal of the dispersion medium,
c) hot pressing the electrode obtained after step b), in particular under a pressure in the range 0.04 - 0.4 t/cm², preferably in the range 0.08 - 0.3 t/cm², and at a temperature in the range from 60°C to 200°C, particularly preferably at 80-150°C,
d) subsequently sintering the electrode at a temperature of at least 200°C, preferably at least 250°C, particularly preferably at least 300°C and particularly preferably up to 400°C.

16. Use of the oxygen-consuming electrode according to any of Claims 1 to 14 as oxygen-consuming cathode in electrolysis, in particular in chloralkali electrolysis, or as electrode in a fuel cell or as electrode in a metal/air battery.

17. Electrolysis apparatus, in particular for chloralkali electrolysis, having an oxygen-consuming electrode according to any of Claims 1 to 14 as oxygen-consuming cathode.

## Revendications

1. Électrode multicouche consommant de l'oxygène pour la réduction d'oxygène dans des milieux alcalins aqueux, comprenant au moins un support, qui est notamment conducteur électrique, une couche contenant un catalyseur et une couche hydrophobe, l'électrode comprenant un côté orienté vers le gaz contenant de l'oxygène et un côté orienté vers l'électrolyte alcalin, qui est **caractérisée en ce que** l'électrode comprend au moins deux couches différentes contenant le catalyseur, qui présentent une teneur différente en catalyseur, et parmi lesquelles la couche extérieure orientée vers le côté du gaz a une proportion plus faible de catalyseur que la couche extérieure orientée vers le côté de l'électrolyte, et la proportion de matériau hydrophobe dans la couche hydrophobe est d'au plus 8 % en poids, et **en ce que** la couche hydrophobe est la couche ayant une proportion plus faible de catalyseur, qui est orientée vers le côté du gaz.

2. Électrode consommant de l'oxygène selon la revendication 1, **caractérisée en ce que** le catalyseur contient de l'argent en tant que composant catalytiquement actif.

3. Électrode consommant de l'oxygène selon l'une quelconque des revendications 1 ou 2, **caractérisée en ce que** la couche du côté orienté vers le côté du gaz présente une proportion de catalyseur de 92 à 98 % en poids, et la couche orientée vers le côté de l'électrolyte présente une proportion de catalyseur de 95 à 99,9 % en poids, la proportion complétée à 100 % de la couche de catalyseur étant à base d'un polymère hydrophobe.

4. Électrode consommant de l'oxygène selon l'une quelconque des revendications 1 à 3, **caractérisée en ce que** les couches contenant le catalyseur sont formées par application d'une suspension contenant des particules d'argent sur le support, séchage de la suspension, compression à chaud des couches, puis frittage de l'électrode formée.

5. Électrode consommant de l'oxygène selon la revendication 4, **caractérisée en ce que** l'argent pour la suspension est utilisé sous la forme d'une poudre dans laquelle la distribution des particules d'argent présente une valeur D₉₀ < 8 µm et une valeur D₁₀ < 1 µm.

6. Électrode consommant de l'oxygène selon l'une quelconque des revendications 4 à 5, **caractérisée en ce que** la densité tassée selon DIN ISO 3953 des particules d'argent pour la suspension se situe dans la plage allant de 2 à 6 g/cm³, de préférence de 3 à 5 g/cm³.

7. Électrode consommant de l'oxygène selon l'une quelconque des revendications 4 à 6, **caractérisée en ce que** la surface moyenne de la poudre d'argent selon BET se situe dans la plage allant de 0,3 à 2,5 m²/g, de préférence de 0,50 à 1,5 m²/g.

8. Électrode consommant de l'oxygène selon l'une quelconque des revendications 1 à 7, **caractérisée en ce qu'**au moins trois couches sont présentes et la couche extérieure orientée vers le côté du gaz présente une proportion de catalyseur de 92 à 98 % en poids, et la couche extérieure orientée vers le côté de l'électrolyte présente une proportion de catalyseur de 95 à 99,9 %, et une couche centrale est présente, qui présente une proportion de catalyseur supérieure à celle de la couche extérieure orientée vers le côté du gaz et inférieure à celle de la couche extérieure orientée vers le côté de l'électrolyte.

9. Électrode consommant de l'oxygène selon l'une quelconque des revendications 1 à 8, **caractérisée en ce que** la couche hydrophobe comprend un polymère hydrophobe, notamment un polymère à substitution fluor, de préférence le PTFE.

10. Électrode consommant de l'oxygène selon l'une quelconque des revendications 4 à 9, **caractérisée en ce que** l'électrode présente une charge totale en composant catalytiquement actif dans une plage allant de 100 mg/cm² à 300 mg/cm², de préférence de 140 mg/cm² à 250 mg/cm².

11. Électrode consommant de l'oxygène selon l'une quelconque des revendications 1 à 10, **caractérisée en ce que** le support est à base de nickel, d'argent ou d'une combinaison de nickel et d'argent.

12. Électrode consommant de l'oxygène selon l'une quelconque des revendications 1 à 11, **caractérisée en ce que** le support se présente sous la forme d'un filet, d'un tissu, d'un tricot, d'un non-tissé ou d'une mousse, de préférence d'un tissu.

13. Électrode consommant de l'oxygène selon l'une quelconque des revendications 1 à 12, **caractérisée en ce que** l'épaisseur de l'électrode est de 0,2 à 0,8 mm.

14. Électrode consommant de l'oxygène selon l'une quelconque des revendications 1 à 13, **caractérisée en ce que** l'épaisseur des couches contenant le catalyseur est d'au plus 0,4 mm.

15. Procédé de fabrication d'une électrode consommant de l'oxygène selon l'une quelconque des revendications 1 à 14, par
a) la fabrication d'au moins deux suspensions par dispersion ou mélange des composants constitués par au moins des particules d'une substance catalytiquement active, de préférence des particules d'argent, et d'un dispersant, de préférence d'un solvant organique ou d'eau, de manière particulièrement préférée d'eau, et de particules d'un polymère hydrophobe ayant une proportion différente de polymères hydrophobes,
b) la pulvérisation des suspensions en plusieurs étapes sur un support pour la formation des différentes couches, de préférence un support en nickel, le support étant porté à une température dans la plage allant de 100 °C à 160 °C, de préférence de 100 °C à 145 °C, avec élimination au moins partielle du dispersant,
c) la compression à chaud de l'électrode obtenue selon l'étape b), notamment sous une pression dans une plage allant de 0,04 à 0,4 t/cm², de préférence dans une plage allant de 0,08 à 0,3 t/cm², et à une température dans la plage allant de 60 °C à 200 °C, de manière particulièrement préférée de 80 à 150 °C, puis
d) le frittage de l'électrode à une température d'au moins 200 °C, de préférence d'au moins 250 °C, de manière particulièrement préférée d'au moins 300 °C et de manière notamment préférée de jusqu'à 400 °C.

16. Utilisation de l'électrode consommant de l'oxygène selon l'une quelconque des revendications 1 à 14 en tant que cathode consommant de l'oxygène dans l'électrolyse, notamment dans l'électrolyse chlore-alcali, ou en tant qu'électrode dans une pile à combustible ou en tant qu'électrode dans une batterie métal/air.

17. Dispositif d'électrolyse, notamment pour l'électrolyse chlore-alcali, comprenant une électrode consommant de l'oxygène selon l'une quelconque des revendications 1 à 14 en tant que cathode consommant de l'oxygène.
